# EUROPEAN PATENT SPECIFICATION

(11) **EP 2 265 845 B1**
(45) Date of publication and mention of the grant of the patent: **13.07.2016**
(21) Application number: 08717924.8
(22) Date of filing: 18.03.2008
(51) Int. Cl.: F16J 15/32

(54) **A SEALING DEVICE WITH A PULSE RING, AND A WHEEL HUB UNIT WITH SUCH A SEALING DEVICE**
DICHTUNGSVORRICHTUNG MIT INTEGRIERTER INDEXSCHEIBE SOWIE RADNABEN-EINHEIT MIT EINER SOLCHEN DICHTUNGSVORRICHTUNG
DISPOSITIF D'ÉTANCHÉITÉ AVEC BAGUE À IMPULSION ET UNITÉ DE MOYEU DE ROUE AVEC UN TEL DISPOSITIF D'ÉTANCHÉITÉ

(43) Date of publication of application: 29.12.2010
(73) Proprietor: Aktiebolaget SKF, 415 50 Göteborg (SE)
(72) Inventor: FOTI, Claudio, I-10046 Poirino (IT)
(74) Representative: Tedeschini, Luca
(86) International application number: PCT/EP2008/053190
(87) International publication number: WO 2009/115113

(56) References cited:
- EP-A- 0 657 738
- US-B1- 6 457 869

## Description

The present invention refers to a sealing device with a pulse ring for a bearing unit, in particular the hub of a wheel of a heavy motor vehicle. The invention can be implemented with non-driven wheel of heavy motor vehicles, particularly but not exclusively, trailers.

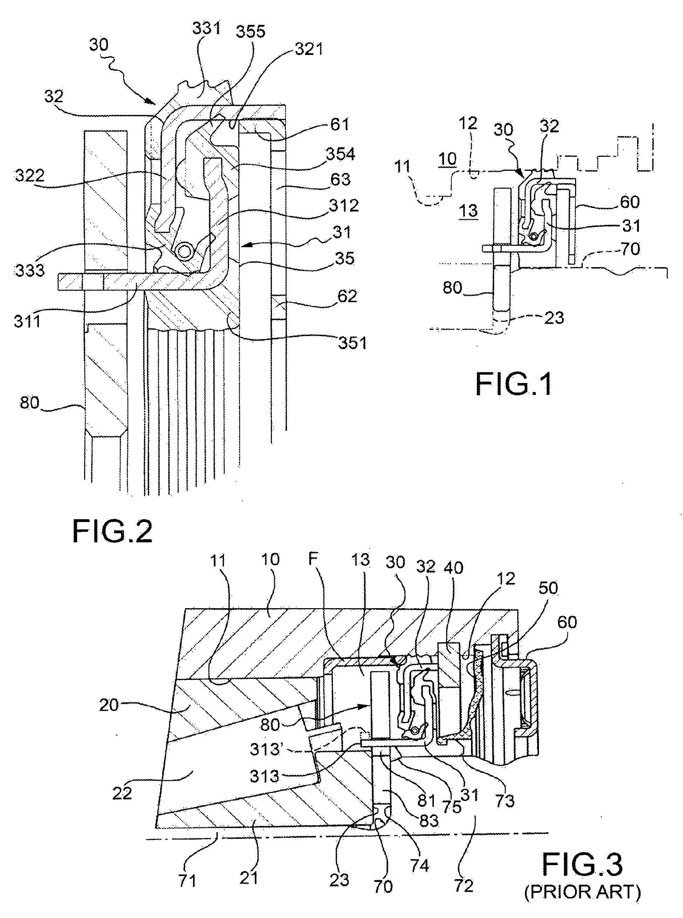

In order to hermetically seal a bearing unit in the hub of a heavy motor vehicle wheel it is known to use a sealing device of the cassette type as shown in figure 3, fitted within the cylindrical cavity 12 of the rotating hub 10 of a heavy motor vehicle wheel. Also fitted within the cavity 12 of the hub are a closure cap of plastics material and an encoder or impulse ring 60 being part of a device for detecting rotational speed of the hub 10. Preassembled units as defined in the preamble of claim 1 are disclosed in EP 0 657 738 A1 and US 6 457 869 B1.

A main object of the invention is to provide a pre-assembled unit capable of reducing the number of assembling steps. Another object of the invention is to provide a unit which his particularly compact in the axial direction. A further object is to compact the hub axially and simplify its shape. A still further object is to reduce the number of steps in machining the hub. Another object is to optimise the sealing performances.

These and other objects and advantages, that will be better understood herein after, are accomplished according to the invention by a pre-assembled unit having the features defined in the appended claims.

The features and the advantages of the invention will be apparent from the detailed description of an embodiment thereof, made with reference to the appended drawings provided by way of non-limitative example, in which:
figure 1 is a partial axial cross-sectional view of a unit according to the invention mounted in the hub of the wheel of a heavy motor vehicle;
figure 2 is a partial axial cross-sectional view, to an enlarged scale, of the unit according to the invention; and
figure 3 is a partial axial cross-sectional view of a known arrangement of a sealing device and an impulse ring in the hub of the wheel of a heavy motor vehicle.

Referring now to figures 1 and 2, schematically indicated in phantom line at 11 is a central cylindrical seat formed in a rotatable hub 10 of the wheel of a heavy motor vehicle. The cylindrical seat 11 is intended to accommodate a tapered roller bearing unit of conventional design (not shown in detail). Towards the axially outer side (or outboard side) of the vehicle, the hub forms a lateral cylindrical cavity 12 of greater diameter than that of the central seat 11. The lateral cavity 12 accommodates a cassette sealing device 30 which integrates a metallic encoder or impulse ring 60 being part of a device for detecting the rotational speed of the hub 10.

A two-diameter shaft schematically indicated at 70 in figure 1 is locked in the inner stationary race of the bearing unit. The sealing device 30 hermetically seals the annular gap 13 between the hub cavity 12 and the shaft 70 to prevent external contaminants (water, dust, mud) from entering the inner parts of the bearing, and to prevent the lubricant grease, which is normally contained within the inner ambient of the bearing for lubricating the rolling surfaces, from leaking out.

The sealing device 30 comprises an annular metallic insert or shield 31 secured to the stationary shaft 70 and an annular metallic insert or shield 32 secured to the rotating hub 10. The stationary inner insert 31 has a substantially L-shaped axial cross-section with a cylindrical axial portion 311 extending in an axially inner direction and a radial wall 312 extending in a radially outer direction towards the hub cavity 12.

The rotating outer insert 32 has an axial cross-section of inverted L shape with an axial cylindrical portion 321 extending in an axially outer direction, and a radial wall 322 extending in a radially inner direction towards the shaft 70.

Vulcanized or co-moulded onto the outer rotating insert 32 is a body 33 of rubber or elastomeric material forming on the cylindrical portion 321 a saw-toothed sealing gasket 331 that performs a static outer sealing action against the cylindrical cavity 12 of the hub. The same rubber body 33 forms a V-shaped dynamic sealing gasket 333 projecting in a radially inner direction from free end of the radial wall 322 for slidingly engaging the insert 31.

The sealing device 30 is constrained through the stationary insert to a flat annular disk 80 that serves to disassemble the shaft 70 in known manner.

Vulcanized or co-moulded to the inner stationary inner 31 is a body 35 of rubber or elastomeric material forming a substantially tubular, inner portion 351 performing a static sealing action by being interposed between the cylindrical portion 311 of the shield 31 and the shaft 70. The body 35 further forms a dynamic sealing gasket 354 slidingly contacting the cylindrical wall 321 of the insert 32 by means of a radial sealing lip 355. Lip 355 projects in a radially outer direction from the free end of the radial wall 312 and slides against the cylindrical wall 321 of rotating insert 32.

The cylindrical wall 321 is extended in an axially outward direction so as to accommodate an encoder or impulse ring 60 within it. The impulse ring 60 is an annular member of L-shaped axial cross section with a radially outer skirt 61 and a wall portion 62 which is preferably substantially radial. The skirt 61 is forcefully fitted in the cylindrical portion 321 of the rotating insert 32 of the sealing device, and remains axially adjacent and near to the sealing lip 355, in a particularly compact arrangement. Advantageously, the wall portion 62 does not protrude axially outside or beyond the cylindrical wall 321. The wall portion 62 comprises an active area 63 suitable for interacting with a rotation sensor (not shown) mounted on a fixed part of the vehicle. The active area 63 of the wall portion 62 can consist of a succession of circumferentially equally spaced slots or teeth. Alternatively, the active area 62 is a succession of magnetized portions made of plastoferrite or elastoferrite. As the wheel turns, the sensor provides electric signals indicative of rotation data (angular position, speed, acceleration, etc.) of the wheel. The electric signals provided by the sensor are transmitted to an electronic processing unit and processed thereby in order to gain information on the motion of the wheel.

As will be appreciated, the impulse ring and the sealing device are mounted on the vehicle in a single assembly step. The compactness of the unit formed by sealing device and impulse ring allows also to render the hub more compact in an axial direction. The hub is simplified, since it is no longer needed to form a special groove inside it for accommodating the impulse ring. Further, the impulse ring located beside and close to the sealing lip performs a considerable labyrinth sealing action that is added to the action of the sliding lip and allows to dispense of the conventional plastic closure cap mentioned in the introductory part of the description.

The invention is not intended to be limited to the embodiments described and illustrated herein, which should be considered as examples of implementation of the invention; rather, the invention may be modified with regard to the shape, dimensions and arrangement of parts, constructional details and materials used. For example, the shape of the sealing lips, that are shown in their non-deformed condition, may differ from the shape shown, as known to those skilled in the art.

## Claims

1. A preassembled unit to be mounted in a rotatable hub of a wheel of a vehicle, the unit comprising
an impulse ring (60) rotatable with the hub (10), and
a sealing device (30) for hermetically sealing a gap (13) between an axial cylindrical cavity (12) of the hub and a central, stationary shaft (70),
wherein the sealing device (30) includes:
- a radially outer, metallic annular insert (32) fixable within the cavity (12) of the rotatable hub and having an axial, cylindrical wall portion (321),
- a radially inner, metallic annular stationary insert (31) mountable onto the shaft (70), and
- at least one gasket of rubber or elastomeric material (331) fixed onto one (31, 32) of said inserts for performing dynamic sealing action against the other (32, 31) insert;
wherein the impulse ring (60) is an annular member with a substantially L-shaped axial cross-section having a substantially radial wall portion (62) and a radially outer skirt (61) fixed within the cylindrical axial wall portion (321) of the rotatable insert (32), a dynamic sealing gasket (354, 355) with a radial lip (355) extending in a radially outer direction from the free end of a radial wall (312) of the stationary insert (31);
**characterised in that** the skirt (61) of the impulse ring (60) is axially adjacent to the radial lip (355) and that the radial lip (355) slidingly contacts the rotatable insert (32).

2. A unit according to claim 1, **characterised in that** the impulse ring (60) is a metallic ring toothed or slotted (63) in its radial wall portion (62).

3. A unit according to claim 1 o 2, **characterised in that** the skirt (61) is forcefully fitted into the cylindrical wall portion (321) of the rotatable insert (32).

4. A unit according to claim 1, **characterised in that** the cylindrical wall portion (321) is extended in an axially outer direction so as to accommodate within it the impulse ring (60), in such manner that the slotted wall (62) does not protrude axially outwardly of the cylindrical wall portion (321).

5. A rotatable hub (10) of a vehicle wheel including a preassembled unit according to any one of the preceding claims.

6. A wheel for a heavy motor vehicle including a rotatable hub (10) according to claim 5.

## Patentansprüche

1. In einer drehbaren Nabe eines Rads eines Fahrzeugs anzubringende vormontierte Einheit, wobei die Einheit Folgendes umfasst:
einen Impulsring (60), der mit der Nabe (10) drehbar ist, und
eine Dichtungsvorrichtung (30) zur hermetischen Abdichtung eines Spalts (13) zwischen einem axialen zylindrischen Hohlraum (12) der Nabe und einer mittleren, stationären Welle (70),
wobei die Dichtungsvorrichtung (30) Folgendes enthält:
- einen radial äußeren, metallischen, ringförmigen Einsatz (32), der in dem Hohlraum (12) der drehbaren Nabe befestigt werden kann und einen axialen, zylindrischen Wandteil (321) aufweist,
- einen radial inneren, metallischen, ringförmigen, stationären Einsatz (31), der auf der Welle (70) angebracht werden kann, und
- mindestens eine Dichtung aus Kautschuk oder einem elastomeren Material (331), die an einem (31, 32) der Einsätze zur Durchführung einer dynamischen Dichtungswirkung gegen den anderen (32, 31) Einsatz befestigt ist;
wobei der Impulsring (60) ein ringförmiges Glied mit einem im Wesentlichen L-förmigen axialen Querschnitt ist, das einen im Wesentlichen radialen Wandteil (62) und eine radial äußere Schürze (61), die in dem zylindrischen axialen Wandteil (321) des drehbaren Einsatzes (32) befestigt ist, aufweist, wobei sich eine dynamische Dichtung (354, 355) mit einer radialen Lippe (355) in einer radial äußeren Richtung von dem freien Ende einer radialen Wand (312) des stationären Einsatzes (31) erstreckt;
**dadurch gekennzeichnet, dass** sich die Schürze (61) des Impulsrings (60) axial neben der radialen Lippe (355) befindet und dass die radiale Lippe (355) mit dem drehbaren Einsatz (32) in Gleitkontakt steht.

2. Einheit nach Anspruch 1, **dadurch gekennzeichnet, dass** der Impulsring (60) ein metallischer Ring mit Zähnen oder Schlitzen (63) in seinem radialen Wandteil (62) ist.

3. Einheit nach Anspruch 1 oder 2, **dadurch gekennzeichnet, dass** die Schürze (61) kraftschlüssig in dem zylindrischen Wandteil (321) des drehbaren Einsatzes (32) angebracht ist.

4. Einheit nach Anspruch 1, **dadurch gekennzeichnet, dass** der zylindrische Wandteil (321) in einer axial äußeren Richtung verlängert ist, um darin den Impulsring (60) so aufzunehmen, dass die Schlitze aufweisende Wand (62) nicht von dem zylindrischen Wandteil (321) axial nach außen ragt.

5. Drehbare Nabe (10) eines Fahrzeugrads, die eine vormontierte Einheit nach einem der vorhergehenden Ansprüche enthält.

6. Rad für ein Schwerkraftfahrzeug, das eine drehbare Nabe (10) nach Anspruch 5 enthält.

## Revendications

1. Unité préassemblée destinée à être montée dans un moyeu rotatif d'une roue d'un véhicule, l'unité comprenant
une bague à impulsion (60) pouvant tourner avec le moyeu (10), et
un dispositif d'étanchéité (30) pour sceller hermétiquement un espace (13) entre une cavité cylindrique axiale (12) du moyeu et un arbre central stationnaire (70),
le dispositif d'étanchéité (30) comportant :
- un insert métallique annulaire radialement extérieur (32) pouvant être fixé à l'intérieur de la cavité (12) du moyeu rotatif et présentant une portion de paroi axiale cylindrique (321),
- un insert métallique annulaire stationnaire radialement intérieur (31) pouvant être monté sur l'arbre (70), et
- au moins une garniture en caoutchouc ou en matériau élastomère (331) fixée sur l'un (31, 32) desdits inserts pour effectuer une action d'étanchéité dynamique contre l'autre (32, 31) insert ;
la bague à impulsion (60) étant un organe annulaire avec une section transversale axiale substantiellement en forme de L ayant une portion de paroi substantiellement radiale (62) et une jupe radialement extérieure (61) fixée à l'intérieur de la portion de paroi axiale cylindrique (321) de l'insert rotatif (32), une garniture d'étanchéité dynamique (354, 355) avec une lèvre radiale (355) s'étendant dans une direction radialement extérieure depuis l'extrémité libre d'une paroi radiale (312) de l'insert stationnaire (31) ;
**caractérisée en ce que** la jupe (61) de la bague à impulsion (60) est axialement adjacente à la lèvre radiale (355) et **en ce que** la lèvre radiale (355) vient en contact de glissement avec l'insert rotatif (32).

2. Unité selon la revendication 1, **caractérisée en ce que** la bague à impulsion (60) est une bague métallique dentée ou fendue (63) dans sa portion de paroi radiale (62).

3. Unité selon la revendication 1 ou 2, **caractérisée en ce que** la jupe (61) est ajustée par force dans la portion de paroi cylindrique (321) de l'insert rotatif (32).

4. Unité selon la revendication 1, **caractérisée en ce que** la portion de paroi cylindrique (321) est prolongée dans une direction axialement extérieure de manière à recevoir en elle la bague à impulsion (60), de telle sorte que la paroi fendue (62) ne fasse pas saillie axialement vers l'extérieur de la portion de paroi cylindrique (321).

5. Moyeu rotatif (10) d'une roue de véhicule comportant une unité préassemblée selon l'une quelconque des revendications précédentes.

6. Roue pour un véhicule à moteur lourd comportant un moyeu rotatif (10) selon la revendication 5.
